(19) Europäisches Patentamt
European Patent Office
Office européen des brevets

(11) **EP 4 108 545 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **22178379.8**

(22) Anmeldetag: **10.06.2022**

(51) Internationale Patentklassifikation (IPC):
**B62D 15/02** *(2006.01)*     **B60W 30/06** *(2006.01)*
**B60W 60/00** *(2020.01)*     **G01C 21/34** *(2006.01)*
**G08G 1/16** *(2006.01)*

(52) Gemeinsame Patentklassifikation (CPC):
**B62D 15/0285; B60W 60/0011; B60W 60/0013; G01C 21/3453; G01C 21/3484; G05D 1/0217; G08G 1/168**

(54) **VERFAHREN ZUM BESTIMMEN EINER AKTUELL BEFAHRBAREN TRAJEKTORIE FÜR EIN ZUMINDEST TEILWEISE ASSISTIERT BETRIEBENES KRAFTFAHRZEUG, SOWIE ASSISTENZSYSTEM**

METHOD FOR DETERMINING A CURRENT TRAJECTORY FOR AN AT LEAST PARTIALLY ASSISTED VEHICLE, AND ASSISTANCE SYSTEM

PROCÉDÉ DE DÉTERMINATION D'UNE TRAJECTOIRE POUVANT ÊTRE ACTUELLEMENT PARCOURUE POUR UN VÉHICULE AUTOMOBILE FONCTIONNANT AU MOINS PARTIELLEMENT DE MANIÈRE ASSISTÉE, AINSI QUE SYSTÈME D'AIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2021 DE 102021206413**

(43) Veröffentlichungstag der Anmeldung:
**28.12.2022 Patentblatt 2022/52**

(73) Patentinhaber: **VOLKSWAGEN AG**
**38440 Wolfsburg (DE)**

(72) Erfinder:
• **Koch, Niklas**
**38479 Tappenbeck (DE)**
• **Seeland, Jana**
**38448 Wolfsburg (DE)**
• **Hopp, Christian**
**38302 Wolfenbüttel (DE)**

(56) Entgegenhaltungen:
DE-A1- 102018 109 883     DE-A1- 102019 110 217
US-A1- 2019 317 512     US-A1- 2020 339 159
US-A1- 2020 387 156     US-A1- 2021 114 617

EP 4 108 545 B1

**Beschreibung**

Die Erfindung betrifft ein Verfahren zum Bestimmen einer aktuell befahrbaren Trajektorie für ein zumindest teilweise assistiert betriebenes Kraftfahrzeug mittels eines Assistenzsystems, bei welchem eine Referenztrajektorie vorgegeben wird und bei welchem eine Vielzahl von weiteren, potentiell befahrbaren Trajektorien bestimmt wird, wobei für eine jeweilige weitere Trajektorie in Abhängigkeit von der Referenztrajektorie ein jeweiliges Gütemaß mittels einer elektronischen Recheneinrichtung des Assistenzsystems bestimmt wird und in Abhängigkeit von dem bestimmten Gütemaß die aktuell befahrbare Trajektorie aus der Vielzahl von weiteren, potentiell befahrbaren Trajektorien mittels der elektronischen Recheneinrichtung bestimmt wird. Ferner betrifft die Erfindung ein Computerprogrammprodukt sowie ein Assistenzsystem.

Aus dem Stand der Technik ist bereits ein sogenanntes trainiertes Parken bekannt, bei welchem eine Trajektorie zu einer festgelegten Endposition angelernt wird. Dieses Anlernen wird auch als Teach-in bezeichnet. Das Kraftfahrzeug fährt die angelernte Strecke später automatisiert ab, was auch als Redrive bezeichnet wird. Dabei kann sich der Fahrer des Kraftfahrzeugs innerhalb oder außerhalb des Kraftfahrzeugs befinden oder das Kraftfahrzeug fährt autonom. Das vorrangige Ziel für die Nutzung eines Gütemaßes ist das Herausfiltern von "schlechten" Trajektorien. Bei diesen Trajektorien ist im Teach-in beispielsweise etwas aufgetreten, was im Redrive als unangenehm für einen Nutzer empfunden wird.

Die DE 10 2016 207 330 A1 betrifft ein Verfahren zum Betreiben eines Fahrzeugs, insbesondere zum Fahren des Fahrzeugs auf einen vorgegebenen Stellplatz, wobei in einer fahrzeugseitigen Speichereinrichtung eine erste Trajektorie für eine automatisierte Fahrt des Fahrzeugs auf den vorgegebenen Stellplatz gespeichert ist, die während einer manuellen Fahrt des Fahrzeugs auf den vorgegebenen Stellplatz erfasst wurde, der ersten Trajektorie Toleranzwerte für eine Abweichung von der ersten Trajektorie zugeordnet sind, um den das Fahrzeug bei einer automatisierten Fahrt auf den vorgegebenen Stellplatz maximal von der ersten Trajektorie abweichen darf, wobei bei wenigstens einer weiteren manuellen Fahrt des Fahrzeugs auf den vorgegebenen Stellplatz die dabei befahrene weitere Trajektorie automatisch erfasst wird, die erste Trajektorie und die weitere Trajektorie miteinander verglichen werden und für den Fall, dass in Bezug auf wenigstens einen vorgebbaren Punkt der ersten Trajektorie eine Abweichung in Bezug auf den Fahrweg des Fahrzeugs durch die weitere Trajektorie festgestellt wird, diese Abweichung von dem vorgebbaren Punkt der ersten Trajektorie zugeordnet wird, derart, dass die festgestellte Abweichung und der dem vorgebbaren Punkt der ersten Trajektorie zugeordnete Toleranzwert addiert und als neuer Toleranzwert für den vorgebbaren Punkt der ersten Trajektorie in der fahrzeugseitigen Speichereinrichtung abgespeichert wird.

Die DE 10 2017 200 234 A1 betrifft ein Verfahren zum Referenzieren einer lokalen Trajektorie in einem globalen Koordinatensystem, wobei die lokale Trajektorie geordnete lokale Positionen in einem lokalen Koordinatensystem umfasst, umfassend die folgenden Schritte: Empfangen mindestens einer auf ein globales Koordinatensystem bezogenen globalen Position einer mit der lokalen Trajektorie korrespondierenden globalen Trajektorie, Bestimmen einer Güte für die mindestens eine globale Position, Auswählen mindestens einer Ankerposition aus der mindestens einen globalen Position auf Grundlage der bestimmten Güte, Ermitteln eines Verschiebungsvektors zwischen der lokalen Trajektorie und der globalen Trajektorie an der mindestens einen Ankerposition, Transformieren der lokalen Positionen der lokalen Trajektorie in das globale Koordinatensystem auf Grundlage des Verschiebungsvektors an der mindestens einen Ankerposition, Ausgeben der in das globale Koordinatensystem transformierten lokalen Positionen.

Die DE 10 2018 109 883 A1 bezieht sich auf ein Verfahren zum kooperativen Abstimmen von zukünftigen Fahrmanövern eines Fahrzeugs mit Fremdmanövern zumindest eines Fremdfahrzeugs, wobei Trajektorien für das Fahrzeug mit je einem Aufwandswert bewertet werden, Trajektorien und Fremdtrajektorien des Fremdfahrzeugs zu Tupeln kombiniert werden, die Trajektorie und der zugehörige Aufwandswert eines kollisionsfreien Tupels als Bezugstrajektorie und Bezugsaufwandswert ausgewählt werden, Trajektorien mit einem niedrigeren Aufwandswert als der Bezugsaufwandswert als Bedarfstrajektorien klassifiziert werden, Trajektorien mit einem höheren Aufwandswert als der Bezugsaufwandswert als Alternativtrajektorien klassifiziert werden und ein Datenpaket mit einer Trajektorienschar aus der Bezugstrajektorie und dem zugehörigen Bezugsaufwandswert sowie zumindest einer Trajektorie aus einer Gruppe umfassend die Bedarfstrajektorien und die Alternativtrajektorien sowie die entsprechenden Aufwandswerte an das Fremdfahrzeug gesendet wird.

Die US 2021/114 617 A1 zielt darauf ab, mögliche Trajektorien zu generieren und eine von ihnen zur Umsetzung auszuwählen. Insbesondere kann ein Rechensystem einen anfänglichen Fahrweg für ein autonomes Fahrzeug ermitteln. Das Rechensystem kann Sensordaten erhalten, die Objekte in einer Umgebung des autonomen Fahrzeugs beschreiben. Das Rechensystem kann eine Vielzahl von Trajektorien für das autonome Fahrzeug basierend auf den Sensordaten und dem anfänglichen Fahrweg erzeugen. Das Rechensystem kann bestimmen, ob der anfängliche Fahrweg, ein Offsetprofil und ein Geschwindigkeitsprofil die Ebenheitskriterien erfüllen. Als Reaktion auf die Feststellung, dass der anfängliche Fahrweg, das Offsetprofil und das Geschwindigkeitsprofil die Ebenheitskriterien erfüllen, kann das Rechensystem den anfänglichen Fahrweg, das Offsetprofil und das Geschwindigkeitsprofil zu der jeweiligen Trajektorie kombinieren. Das Rechensystem kann eine Trajektorie aus der Vielzahl von Trajektorien bestimmen.

Systeme und Verfahren gemäß der US 2020/387 156 A1 umfassen ein Bewegungsplanungsmodul, das iterativ mögliche Trajektorien für ein zu verfolgendes Fahrzeug bestimmt, geschätzte Kosten berechnet, die mit jeder möglichen Trajektorie auf der Grundlage von Kostenfunktionen und Kostengewichten verbunden sind, wobei jede Kostenfunktion einem Trajektorienbewertungsmerkmal entspricht, und eine optimale Trajektorie mit den geringsten zugehörigen geschätzten Kosten auswählt. Wenn das Fahrzeug in einem Lernmodus betrieben wird, bestimmt ein Lernmodul eine erste tatsächliche Trajektorie, die das Fahrzeug zurückgelegt hat, vergleicht die erste tatsächliche Trajektorie mit der optimalen Trajektorie für diesen Zeitraum und aktualisiert die Kostengewichte auf der Grundlage des Vergleichs. Wenn das Fahrzeug in einem Lernmodus betrieben wird, bestimmt ein Lernmodul eine zweite tatsächliche Trajektorie, die von dem Fahrzeug zurückgelegt wurde, vergleicht die zweite tatsächliche Trajektorie mit der optimalen Trajektorie, die für diesen Zeitraum ausgewählt wurde, und erzeugt eine Ausgabe an einen Benutzer des Fahrzeugs auf der Grundlage des Vergleichs.

In der US 2019/317 512 A1 erzeugt ein System eine Vielzahl von Trajektorienkandidaten für ein autonom fahrendes Fahrzeug (ADV) von einem Startpunkt zu einem Endpunkt eines bestimmten Fahrszenarios. Das System erzeugt eine Referenztrajektorie, die dem Fahrszenario entspricht, basierend auf einem aktuellen Zustand des ADV, der mit dem Startpunkt verbunden ist, und einem Endzustand des ADV, der mit dem Endpunkt verbunden ist, wobei die Referenztrajektorie mit einem Ziel verbunden ist. Für jeden der Trajektorienkandidaten vergleicht das System den Trajektorienkandidaten mit der Referenztrajektorie, um objektive Kosten zu erzeugen, die eine Ähnlichkeit zwischen dem Trajektorienkandidaten und der Referenztrajektorie darstellen. Das System wählt einen der Trajektorienkandidaten als Zieltrajektorie für den Antrieb des ADV auf der Grundlage der objektiven Kosten der Trajektorienkandidaten aus.

Aufgabe der vorliegenden Erfindung ist es, ein Verfahren, ein Computerprogrammprodukt sowie ein Assistenzsystem zu schaffen, mittels welchen eine verbesserte Bewertung von Trajektorien realisiert werden kann.

Diese Aufgabe wird durch ein Verfahren, ein Computerprogrammprodukt sowie ein Assistenzsystem gemäß den unabhängigen Patentansprüchen gelöst. Vorteilhafte Weiterbildungen sind in den Unteransprüchen angegeben.

Ein Aspekt der Erfindung betrifft ein Verfahren zum Bestimmen einer aktuell befahrbaren Trajektorie für ein zumindest teilweise assistiert betriebenes Kraftfahrzeug mittels eines Assistenzsystems, bei welchem eine Referenztrajektorie vorgegeben wird und bei welchem eine Vielzahl von weiteren, potentiell befahrbaren Trajektorien bestimmt wird, wobei für eine jeweilige weitere Trajektorie in Abhängigkeit von der Referenztrajektorie ein jeweiliges Gütemaß mittels einer elektronischen Recheneinrichtung des Assistenzsystems bestimmt wird und in Abhängigkeit von dem bestimmten Gütemaß die aktuell befahrbare Trajektorie aus der Vielzahl von weiteren, potentiell befahrbaren Trajektorien mittels der elektronischen Recheneinrichtung bestimmt wird.

Es ist vorgesehen, dass bei dem Gütemaß fahrerspezifische Eigenschaften berücksichtigt werden.

Somit wird insbesondere eine qualitative Bewertung der Vielzahl von weiteren, potentiell befahrbaren Trajektorien durchgeführt und in Abhängigkeit dieser Bewertung wiederum die aktuell befahrbare Trajektorie bestimmt, insbesondere diejenige, welche das höchste Gütemaß aufweist.

Insbesondere ist somit ein Verfahren zur qualitativen Bewertung von Trajektorien insbesondere im Rahmen des trainierten Parkens vorgeschlagen, um die geeignete Trajektorie unter Berücksichtigung definierter Bewertungskriterien auszuwählen. Das vorrangige Ziel hierbei ist die Nutzung eines Gütemaßes, wobei hierbei das Herausfiltern von sogenannten "schlechten" Trajektorien im Mittelpunkt steht. Bei diesen Trajektorien ist beispielsweise im sogenannten Teach-in etwas aufgetreten, was im Redrive als unangenehm empfunden wird. Dabei kann es sich zum Beispiel um einen zusätzlichen Haltepunkt oder das Umfahren eines dynamischen beziehungsweise temporären Hindernisses handeln.

Ferner entsteht durch die qualitative Bewertung beziehungsweise durch die Nutzung des Gütemaßes von Trajektorien eine Reihe von Vorteilen für die Nutzung in Park- und Rangierfunktionen wie trainiertes Parken oder Reversing Assist. Es findet eine Objektivierung der Güte einzelner Trajektorien beziehungsweise von Trajektoriensegmenten statt und damit kann eine Vergleichbarkeit geschaffen werden. Das Gütemaß dient dabei als Bewertungsgrundlage für Trajektorien. Die Nutzung für die prognostizierte Tauglichkeit beziehungsweise die Qualität der Funktionen an einem bestimmten Ort oder Streckensegment kann ebenfalls realisiert werden. Ferner ist eine Möglichkeit geschaffen zur Datenreduktion durch Auswahl der "besten" Trajektorien für die Speicherung. Ferner ist eine Möglichkeit geschaffen zur Feststellung einer "schlechten" Datenbasis für einen Trajektorien-Bereich, um beispielsweise ein erneutes Teach-in vorzuschlagen. Die Vielzahl von Trajektorien kann dann wiederum klassifiziert werden insbesondere anhand des Gütermaßes.

Eine Trajektorie kann dabei anhand von verschiedenen Kriterien bewertet werden. Zum Beispiel Abstand zur Wand/Hindernissen, Fahrweise oder dergleichen. Diese Bewertungskriterien können abhängig von den Vorlieben des Fahrers unterschiedlich gewichtet werden über Gewichtungsfaktoren. Somit kann zum Beispiel für einen vorsichtigen Fahrer eine andere Trajektorie optimal sein als für einen Fahrer, der schnell sein Ziel erreichen möchte. Zur Beurteilung der Güte einer Trajektorie können Bewertungskriterien mit unterschiedlichen Prioritäten behaftet werden. Die Güte ist sowohl abhängig von der Verwendung, beispielsweise verschiedene Szenarien, in denen verschiedene Zielsetzungen verfolgt werden, des Einsatzzwecks und entsprechend der Vorlieben des Nutzers.

Durch die Nutzung vorgegebener Gütekriterien kann die Fahrweise des Fahrers klassifiziert werden, zum Beispiel vorsichtig oder dynamisch. Im Redrive können dem Fahrer bevorzugt Trajektorien angeboten werden, die seiner Fahrweise entsprechen. Die Fahrweise lässt sich mit bekannten Verfahren, beispielsweise mittels Machine Learning, auf einer kraftfahrzeugexternen elektronischen Recheneinrichtung schon bei der Analyse von gesendeten Trajektorien lernen, oder aus vorhandenen Fahrerprofilen ableiten. Fahrerprofile lassen sich zum Beispiel auch mithilfe der Trajektorien aus einem Buffer für ADAS-Funktionen (Advanced Driver Assistance System), also sogenannte Fahrerassistenzsysteme, bestimmen, wobei diese während der Fahrt automatisch aufgezeichnet werden.

Damit wird eine neue Basis geschaffen, die es erlaubt, eine situationsabhängige Vergleichbarkeit von Trajektorien herzustellen, bei vorgegebenen Prioritäten oder bekannter Zielsetzung zweckgebunden optimale Trajektorien auszuwählen oder zu generieren, beispielsweise simulativ. Hier sind wiederum verschiedene Strategien möglich, zum einen kann eine allgemeine Normierung der Trajektorien erzielt werden, zum anderen lässt sich die Gewichtung auf spezifische Situationen anpassen.

Bei der Trajektorie kann es sich entweder um eine Trajektorie handeln, welche direkt vom nutzenden Fahrzeug aufgezeichnet wurde, oder eine Trajektorie, welche synthetisch generiert wurde. Ebenso kann es sich um eine vollständige Trajektorie oder um ein Trajektoriensegment handeln.

Für die Bewertung ist die Referenztrajektorie entscheidend. Die Referenztrajektorie wird entweder in einem sogenannten Teach-in aufgezeichnet oder durch Auswertung mehrerer Fahrten beziehungsweise einer Auswertung zusätzlicher Daten für die Strecke oder eines Streckensegments generiert. Wenn die Anzahl von Kraftfahrzeugen eine ähnliche Abweichung von der Referenztrajektorie aufweist, kann beispielsweise eine Anpassung der Referenztrajektorie notwendig sein. Dieses ist zum Beispiel möglich bei einer Baustelle oder einer geänderten Verkehrsführung.

Insbesondere ist somit das Gütemaß als erfindungsgemäße Idee vorgeschlagen. Das Gütemaß ist dabei problemspezifisch aufgestellt. Die Basis stellt das sogenannte allgemeine Gütemaß dar. Das Gütemaß ist der Vergleichsoperator einer zu bewertenden Trajektorie $x_i$ mit der Referenztrajektorie $x_r$. Ein sogenanntes Tuning beziehungsweise eine Anpassung des Gütemaßes kann dann über eine entsprechende Bestrafungs-/Gewichtungsfunktion beziehungsweise Bestrafungs-/Gewichtungsfaktoren $k_i$ erfolgen.

Insbesondere kann das sogenannte allgemeine Gütemaß durch die Formel:

$$g_{\text{Trajektorie, i}} = \int_{t_{Start}}^{t_{Ende}} f\left(k_{1\ldots n}, \bar{x}_i, \bar{x}_r\right) dt.$$

$k_i$ sind dabei die Bestrafungs-/Gewichtungsfaktoren. $x_i$ sind beliebige Trajektoriendaten als Vektor über die Zeit. $x_r$ sind die Referenztrajektorien, also solche Trajektorien, mit denen die zu bewertende Trajektorie "verglichen" wird. f wiederum ist das Gütefunktional, was beispielsweise dem Quadrat der Differenzen zur mittleren Trajektorie entspricht. $t_{Start}$ ist der Startzeitpunkt der Trajektorie beziehungsweise des Trajektorienabschnitts und $t_{Ende}$ ist der Endzeitpunkt der Trajektorie beziehungsweise des Trajektorienabschnitts.

Die Referenztrajektorie wird dabei insbesondere als ideal angesehen. Es ist für die Bewertung irrelevant, wie die Referenztrajektorie erzeugt wurde, zum Beispiel ein besonders gutes Teach-in oder eine synthetisch erzeugte Trajektorie beziehungsweise Trajektoriensegment. Das Ergebnis der Bewertung ist abhängig von der festgelegten Referenztrajektorie. Die Referenztrajektorie kann auch für ein Trajektoriensegment genommen werden. Die Referenztrajektorie kann auch auf Basis von zuvor eingefahrenen Trajektorien berechnet werden, indem zum Beispiel der Mittelwert aller Trajektorien verwendet wird. Abhängig von einer Natur des Wertes kann auch das Minimum der Werte, zum Beispiel bei der Querbeschleunigung, oder das Maximum, zum Beispiel Geschwindigkeit des Fahrzeugs, verwendet werden. Die Referenztrajektorie kann auch nachbearbeitet, beispielsweise automatisch oder manuell, werden, zum Beispiel durch Glättung, um Ausreißer zu verhindern.

Insbesondere können beispielsweise unter fahrzeugspezifischer Eigenschaft die Größe, der Wendekreis, der Radstand sowie das Gewicht des Kraftfahrzeugs angesehen werden. Unter fahrerspezifischer Eigenschaft kann beispielsweise eine sportliche Fahrweise beziehungsweise eine defensive Fahrweise angesehen werden.

Gemäß einer vorteilhaften Ausgestaltungsform wird zusätzlich bei dem Gütemaß zumindest eine fahrdynamische Eigenschaft des Kraftfahrzeugs auf der weiteren Trajektorie berücksichtigt. Beispielsweise können weitere Fahrzeugmessdaten wie die Geschwindigkeiten, Beschleunigungen, insbesondere sowohl Querbeschleunigung, Längsbeschleunigung als auch Vertikalbeschleunigung dabei berücksichtigt werden. Somit kann verbessert das Gütemaß bestimmt werden.

Ferner hat es sich als vorteilhaft erwiesen, wenn zusätzlich bei dem Gütemaß zumindest eine aktuelle Umgebungsbedingung berücksichtigt wird. Beispielsweise können als Umgebungsbedingung entsprechende Wetterverhältnisse beziehungsweise zeit- und eventabhängige Daten genutzt werden. Ferner können als Umfelddaten beispielsweise die Erkennung von statischen und dynamischen Hindernissen und Freiräumen als Umgebungsbedingung erkannt werden. Bei den zeit- und eventabhängigen Daten kann beispielsweise das Verkehrsaufkommen berücksichtigt werden, wobei hierbei beispielsweise unterschieden werden kann zwischen einem typischen Verkehrsaufkommen an bestimmten Wochentagen versus einem Spitzenaufkommen am Wochenende beziehungsweise ein stark erhöhtes Verkehrsaufkommen zu Konzerten oder ähnliches.

Weiterhin vorteilhaft ist, wenn die Vielzahl von weiteren, potentiell befahrbaren Trajektorien durch reales Aufzeichnen und/oder Simulieren erzeugt wird. Bei dem Simulieren handelt es sich insbesondere um sogenannte synthetisch erzeugte Trajektorien. Insbesondere weisen die aufgezeichneten Trajektorien, was einer reellen Aufnahme entspricht, beziehungsweise synthetisierten Trajektorien zumindest Ortsdaten und den Zeitverlauf dieser Trajektorien auf. Somit kann auf einfache Art und Weise eine Vielzahl von potentiell befahrbaren Trajektorien bereitgestellt werden, wodurch verbessert die aktuell zu befahrende Trajektorie bestimmt werden kann.

In einer weiteren vorteilhaften Ausgestaltungsform wird die Vielzahl von weiteren, potentiell befahrbaren Trajektorien vor der Gütemaßbewertung vorgefiltert und nicht-relevante weitere Trajektorien herausgefiltert. Insbesondere findet somit eine Vorverarbeitung beziehungsweise Vorfilterung der Trajektorien statt. Insbesondere können dabei unvollständige Datensätze beziehungsweise Datensätze mit Messfehlern entfernt werden. Ferner können beispielsweise auch Datensätze entfernt werden, die weniger als ein komplettes Segment umfassen. Außerdem können auch "extreme" Datensätze entfernt werden, beispielsweise wenn diese sehr starke Beschleunigungen über einen gewissen Schwellwert hinaus aufweisen.

Insbesondere kann weiter vorgesehen sein, dass innerhalb des Gütemaßes zumindest die fahrzeugspezifischen und/oder fahrerspezifischen Eigenschaften gewichtet werden. Dies kann insbesondere über die sogenannten Bestrafungs-/Gewichtungsfaktoren $k_i$ realisiert werden. Die Bestrafungs-/Gewichtungsfaktoren können besondere Eigenschaften/Events, beispielsweise Fahrzeugtyp, Fahrweise, Fahrer, Wetter, fahrdynamische Effekte oder Vorkommnisse, auf- oder abwerten. Zum Beispiel können Zeiträume mit dem Auftreten hoher Querbeschleunigung abgewertet werden, da eine größere Streuung erwartet werden kann, und die keinen großen Einfluss haben sollen oder es kann ein hohes quantifiziertes Verkehrsaufkommen als Bestrafung genutzt werden, da auch dort hohe Abweichungen erwartet werden können. Somit kann verbessert die aktuell befahrene Trajektorie ausgewählt werden.

In einer weiteren vorteilhaften Ausgestaltungsform wird in Abhängigkeit von reell abgefahrenen Trajektorien die Referenztrajektorie angepasst. Insbesondere wird die Referenztrajektorie zunächst als fest vorgegeben angesehen. Abhängig von der Anwendung kann es sinnvoll sein, jedoch die Referenztrajektorie zu modifizieren. Es kann beispielsweise vorkommen, dass sich die befahrbare Strecke verändert, zum Beispiel durch eine Baustelle, eine geänderte Verkehrsführung, Liegenbleiber oder andere temporäre Auffälligkeiten. In diesem Fall würden die Trajektorien, die zum Beispiel der neuen Verkehrsführung folgen, als Ausreißer verworfen werden. Ferner kann nach einer gewissen Zeit oder Event korreliert nach einer Anzahl von befahrbaren Trajektorien eine Häufung bisher verworfener Trajektorien erkannt werden, wobei dann die Referenztrajektorie zum Beispiel an die neue Verkehrsführung angepasst werden kann. Ferner, wenn in einem Trajektoriensegment eine Baustelle ist und daher alle neuen Trajektorien eine Umfahrung der Baustelle enthalten, so wird die "aktuell beste" Trajektorie nach einer Zeit/Häufigkeit die Umfahrung der Baustelle enthalten. Werden vermehrt ähnliche Abweichungen zur ursprünglichen Referenztrajektorie, insbesondere die dem Mittel der Messdaten entsprechen, detektiert, lassen sich reale Änderungen von Ausreißern oder fehlerbehaftete Daten verifizieren und dadurch Update-Hypothesen generieren. So können zum Beispiel Veränderungen im Parkhaus, Baustellen, Liegenbleiber oder auch andere temporäre Auffälligkeiten erkannt, unterschieden und verarbeitet werden.

In einer weiteren vorteilhaften Ausgestaltungsform wird eine Streuung von reell abgefahrenen Trajektoriensegmenten innerhalb der reell abgefahrenen Trajektorie berücksichtigt. Es kann beispielsweise sein, dass einige Streckensegmente eine höhere Streuung der einzelnen Trajektorien aufweisen als andere Streckensegmente, zum Beispiel wird in Segmenten mit Geradeausfahrten weniger Streuung über die verschiedenen Fahrzeugklassen vorliegen als in Segmenten mit Kurven, bei denen sich die Einlenkpunkte abhängig von der Fahrzeuggröße unterscheiden können. Darüber hinaus können auch verschiedene Beschleunigungen oder dergleichen eine Streuung aufweisen. Aus den Parametern, die eine höhere Streuung aufweisen, können Gruppen gebildet werden, um für den Fahrer relevante Trajektorien zu generieren beziehungsweise die Trajektorien genauer zu bewerten. Solche Gruppen können beispielsweise sein: dynamische Fahrweise, große Fahrzeuge oder vorsichtige Fahrweise, zum Beispiel mit geringen Beschleunigungen und hohem Abstand zu Hindernissen.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Ein weiterer Aspekt der Erfindung betrifft daher auch ein computerlesbares Speichermedium mit dem Computerprogrammprodukt.

Ferner betrifft die Erfindung auch ein Assistenzsystem zum Bestimmen einer aktuell befahrbaren Trajektorie für ein zumindest teilweise assistiert betriebenes Kraftfahrzeug, mit zumindest einer elektronischen Recheneinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Die elektronische Recheneinrichtung weist dabei insbesondere Prozessoren, Schaltkreise, insbesondere integrierte Schaltkreise, sowie weitere elektronische Bauteile auf, um ein entsprechendes Verfahren durchführen zu können.

Ferner betrifft die Erfindung auch ein zumindest teilweise assistiert betriebenes Kraftfahrzeug mit einem Assistenzsystem. Das Kraftfahrzeug kann dabei auch vollautonom ausgebildet sein.

Zu der Erfindung gehören auch Weiterbildungen des erfindungsgemäßen Assistenzsystems sowie des Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems und des Kraftfahrzeugs hier nicht noch einmal beschrieben.

Die Erfindung umfasst auch die Kombinationen der Merkmale der beschriebenen Ausführungsformen.

Im Folgenden wird ein Ausführungsbeispiel der Erfindung beschrieben. Hierzu zeigt die einzige Figur ein schematisches Ablaufdiagramm gemäß einer Ausführungsform des Verfahrens.

Bei dem im Folgenden erläuterten Ausführungsbeispiel handelt es sich um ein bevorzugtes Ausführungsbeispiel der Erfindung. Bei dem Ausführungsbeispiel stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist das beschriebene Ausführungsbeispiel auch durch weitere der bereits beschriebenen Merkmale der Erfindung ergänzbar.

In der Figur sind funktionsgleiche Elemente jeweils mit denselben Bezugszeichen versehen.

Die Fig. zeigt ein schematisches Ablaufdiagramm gemäß einer Ausführungsform eines Verfahrens.

In der Fig. ist insbesondere rein schematisch ein Assistenzsystem 1 mit zumindest einer elektronischen Recheneinrichtung 2 abgebildet, welches die Verfahrensschritte gemäß einer Ausführungsform der Erfindung durchführt. Die Fig. zeigt insbesondere, dass in einem ersten Schritt S1 reelle Trajektorien 3 oder simulierte Trajektorien 4 erzeugt beziehungsweise aufgezeichnet werden. Diese reellen Trajektorien 3 beziehungsweise simulierten Trajektorien 4 weisen zumindest Ortsdaten 5 auf, und insbesondere einen Zeitverlauf der entsprechenden Trajektorien 3, 4. Die reellen Trajektorien 3 und die simulierten Trajektorien 4 werden auch als Referenztrajektorien 18 genutzt. Die reellen Trajektorien 3 und die simulierten Trajektorien 4 bilden wiederum die Basis für weitere Trajektorien 16. Ferner können fahrdynamische Eigenschaften 6 des ebenfalls rein schematisch dargestellten Kraftfahrzeugs 7 mit dem Assistenzsystem 1 berücksichtigt werden. Hierbei handelt es sich beispielsweise um Geschwindigkeiten beziehungsweise Querbeschleunigungen, Längsbeschleunigungen oder Vertikalbeschleunigungen des Kraftfahrzeugs 7. Des Weiteren können fahrzeugspezifische Eigenschaften 8, wie beispielsweise Größe, Wendekreis, Radstand beziehungsweise Gewicht des Kraftfahrzeugs 7, berücksichtigt werden. Es werden auch fahrerspezifische Eigenschaften 9, wie beispielsweise sportliches Fahren oder defensives Fahren, berücksichtigt, wobei hierbei insbesondere ein sogenanntes Fahrprofil gebildet werden kann. Ferner können auch Umgebungsbedingungen 10 berücksichtigt werden, wobei dies insbesondere beispielsweise die Erkennung von statischen und dynamischen Hindernissen beziehungsweise Freiräumen umfasst. Ebenfalls können auch zeitbeziehungsweise eventabhängige Daten sowie ein Verkehrsaufkommen 11 berücksichtigt werden, wobei hierbei ein typisches Verkehrsaufkommen 11 an Wochentagen versus einem Spitzenaufkommen am Wochenende berücksichtigt werden kann, sowie ein stark erhöhtes Verkehrsaufkommen 11 zu beispielsweise Konzerten.

In einem zweiten Schritt S2 erfolgt das Speichern der Trajektorien auf einer kraftfahrzeugexternen elektronischen Recheneinrichtung oder im Kraftfahrzeug 1 selbst, dann beispielsweise in einer Speichereinrichtung 12 der elektronischen Recheneinrichtung 2. In einem dritten Schritt S3 erfolgt die Vorverarbeitung beziehungsweise Vorfilterung der Datensätze, wobei hierbei ein Entfernen von unvollständigen Datensätzen sowie von Datensätzen mit Messfehlern erfolgt. Ferner kann das Entfernen von Datensätzen, die weniger als ein komplettes Trajektoriensegment umfassen, durchgeführt werden, sowie das Entfernen extremer Datensätze, beispielsweise mit Beschleunigungswerten oberhalb eines Schwellwerts.

In einem vierten Schritt S4 erfolgt wiederum die Berechnung eines Gütemaßes 13 für die einzelnen, weiteren Trajektorien 16, wobei hierbei insbesondere sowohl die fahrzeugspezifischen Eigenschaften 8 sowie die fahrerspezifischen Eigenschaften 9 berücksichtigt werden. Hierbei kann beispielsweise eine Bestrafung 14 im Gütekriterium in der Optimierung durchgeführt werden sowie eine Gewichtung 15 im Gütekriterium abhängig des Zwecks beziehungsweise der Verwendung, zum Beispiel bei verschiedenen Szenarien, in denen verschiedene Zielsetzungen verfolgt werden.

In einem fünften Schritt S5 erfolgt die Bewertung der Trajektorien 16 beziehungsweise der Trajektoriensegmente. In einem sechsten Schritt S6 erfolgt die Auswahl der weiteren Trajektorien 16 beziehungsweise der Trajektoriensegmente auf Basis des berechneten Gütemaßes 13. Im siebten Schritt S7 werden die ausgewählten beziehungsweise generierten, weiteren Trajektorien 16 abgespeichert, wobei dies sowohl kraftfahrzeugintern auf der Speichereinrichtung 12 oder auf der kraftfahrzeugexternen elektronischen Recheneinrichtung, insbesondere einem sogenannten Backend, realisiert werden kann. Im achten Schritt S8 erfolgt dann wiederum die Nutzung einer ausgewählten Trajektorie 17 in einem sogenannten Redrive oder es können auf Basis der ausgewählten beziehungsweise bestimmten Trajektorie 17 weitere synthetische Trajektorien 16 erzeugt werden.

Insbesondere zeigt somit die Figur das Verfahren zum Bestimmen der aktuell befahrbaren Trajektorie 17, bei welchem eine Referenztrajektorie 18 vorgegeben wird und bei welchem eine Vielzahl von weiteren, potentiell befahrbaren Trajektorien 16 bestimmt wird, wobei für eine jeweilige weitere Trajektorie 16 in Abhängigkeit von der Referenztrajektorie

ein jeweiliges Gütemaß 13 mittels der elektronischen Recheneinrichtung 2 des Assistenzsystems 1 bestimmt wird und in Abhängigkeit von dem bestimmten Gütemaß 13 die aktuell befahrbare Trajektorie 17 aus der Vielzahl von weiteren, potentiell befahrbaren Trajektorien 16 mittels der elektronischen Recheneinrichtung 2 bestimmt wird. Es ist dabei vorgesehen, dass bei dem Gütemaß 13 fahrzeugspezifische Eigenschaften 8 und/oder fahrerspezifische Eigenschaften 9 berücksichtigt werden.

Insbesondere schlägt somit die Erfindung als einen Hauptpunkt das Gütemaß 13 vor. Das Gütemaß 13 wird dabei problemspezifisch aufgestellt. Die Basis stellt ein sogenanntes allgemeines Gütemaß dar. Das allgemeine Gütemaß 13 ist der Vergleichsoperator einer zu bewertenden Trajektorie $x_i$ mit der Referenztrajektorie $x_r$. Eine entsprechende Anpassung des Gütemaßes 13 kann dann über Bestrafungsfaktoren 14 beziehungsweise Gewichtungsfaktoren 15, welche nachfolgend als $k_i$ bezeichnet werden, erfolgen.

$$g_{\text{Trajektorie, i}} = \int_{t_{Start}}^{t_{Ende}} f\left(k_{1\ldots n},\ \bar{x}_i,\ \bar{x}_r\right) dt.$$

$k_i$ sind dabei die Bestrafungs-/Gewichtungsfaktoren 14, 15. die Bestrafungs-/Gewichtungsfaktoren 14, 15 können besondere Eigenschaften beziehungsweise Events auf beziehungsweise abwerten. Beispielsweise könnten Zeiträume mit dem Auftreten hoher Querbeschleunigung abgewertet werden, da größere Streuungen erwartet werden und die keinen großen Einfluss haben sollten. Ferner kann ein hohes quantifiziertes Verkehrsaufkommen als Bestrafung genutzt werden, da auch dort hohe Abweichungen erwartet werden können. $x_i$ sind beliebige Trajektoriendaten als Vektor über die Zeit, zum Beispiel Geschwindigkeiten, Beschleunigungen, Ortsdaten, Bremsdruck, Neigungswinkel, Einfederweg der Dämpfer oder dergleichen. Die Trajektorie 16 muss dabei nicht unmittelbar von dem Kraftfahrzeug 7 aufgezeichnet werden. Sie kann auch synthetisch erzeugt werden, wie zum Beispiel über Karten oder eine Simulation oder mittelbar durch die messtechnische Erfassung anderer Verkehrsteilnehmer. $x_r$ sind die Referenztrajektorien 18, also solche Trajektorien, mit denen die zu bewertende Trajektorie "verglichen" wird. f (...) ist das Gütefunktional, zum Beispiel das Quadrat der Differenzen zur mittleren Trajektorie. $t_{Start}$ ist der Startzeitpunkt der Trajektorie/des Trajektorienabschnitts und $t_{Ende}$ ist der Endzeitpunkt der Trajektorie/ des Trajektorienabschnitts.

Ein Beispiel für ein spezifisches Gütemaß kann mit der folgenden Formel:

$$g_{Trajektorie,i} = \int_{t_{Start}}^{t_{Ende}} k_{Fahrweise}, k_{Verkehrsaufkommen} \begin{pmatrix} x_{Mittel}(t) - x_{Trajektorie,i}(t) \\ y_{Mittel}(t) - y_{Trajektorie,i}(t) \\ a_{l,Mittel}(t) - a_{l,Trajektorie,i}(t) \\ a_{q,Mittel}(t) - a_{q,Trajektorie,i}(t) \end{pmatrix}^2 dt$$

beschrieben werden. $k_{Fahrweise}$ ist ein Gewichtungsfaktor für die Fahrweise des Fahrers, beispielsweise unauffällig versus dynamisch. $k_{Verkehrsaufkommen}$ ist ein Gewichtungsfaktor von hohem Verkehrsaufkommen. $x_i(t)$ ist die x-Koordinate der Trajektorie Nummer i zum Zeitpunkt t. $y_i(t)$ ist die y-Koordinate der Trajektorie Nummer i zum Zeitpunkt t. $a_{l,i}(t)$ ist die Längsbeschleunigung der Trajektorie Nummer i zum Zeitpunkt t. $a_{q,i}(t)$ ist die Querbeschleunigung der Trajektorie Nummer i zum Zeitpunkt t. $x_{Mittel}(t)$ ist die x-Koordinate der übermittelten Trajektorie zum Zeitpunkt t. $y_{Mittel}(t)$ ist die y-Koordinate der gemittelten Trajektorie zum Zeitpunkt t. $a_{l,Mittel}(t)$ ist die Längsbeschleunigung der gemittelten Trajektorie zum Zeitpunkt t. $a_{q,Mittel}(t)$ ist die Querbeschleunigung der gemittelten Trajektorie zum Zeitpunkt t. In diesem Beispiel wird die gemittelte Trajektorie als Referenztrajektorie 18 verwendet. Es können weitere Gewichtungsfaktoren oder Trajektoriendaten beliebig hinzugefügt werden.

Weitere Beispiele für die Bestrafungsfaktoren 14 beziehungsweise Gewichtungsfaktoren 15 können die dynamische Fahrweise beziehungsweise hohe Beschleunigungswerte als subjektiver Eindruck der Quer- und Längsbeschleunigungen sein. Ferner kann die Anzahl der Brems- und Beschleunigungsvorgänge sowie die Anzahl der Lenkeingriffe und die Hindernisse im Fahrweg ebenfalls als Bestrafungs-/Gewichtungsfaktoren 14, 15 angesehen werden. Auch können ein atypisches Verkehrsaufkommen 11, Mehrzügigkeit, Haltepunkte, Abstand zu statischen Hindernissen sowie weitere Umfeld- und Fahrzeugparameter, die die Güte der Trajektorie 16 beeinflussen, als Bestrafungs-/Gewichtungsfaktoren 14, 15 angesehen werden. Die Menge der Bestrafungs-/Gewichtungsfaktoren 14, 15 kann je nach Anwendung oder zur Verfügung stehender Trajektoriendaten erweitert werden.

Das Gütemaß 13 wird insbesondere normiert, damit die Ergebnisse des Gütemaßes 13 über unterschiedliche Trajektorien 16 hinweg verglichen werden können. So kann der absolute Zahlenwert direkt für die Bewertung einer Trajektorie 16 herangezogen werden. Idealerweise erfolgt die Normierung über eine Längeneigenschaft der Trajektorie 16, zum Beispiel zurückgelegter Weg in der Referenztrajektorie 3, 4 oder Distanz zwischen Start- und Endpunkt der Referenztrajektorie 3, 4.

Alternativ kann die Normierung über die Zeit auch eine Normierung über die Strecke, beispielsweise pro Streckensegment oder eine andere geeignete Variable, erfolgen.

Ferner kann vorgesehen sein, dass die Referenztrajektorie 18 zunächst als fix angesehen wird. Abhängig von der Anwendung kann es sinnvoll sein, die Referenztrajektorie 18 zu modifizieren. Es kann beispielsweise vorkommen, dass sich die befahrbare Strecke verändert, zum Beispiel durch eine Baustelle, eine geänderte Verkehrsführung, Liegenbleiber oder andere temporäre Auffälligkeiten. In diesem Fall würden Trajektorien 16, die zum Beispiel der neuen Verkehrsführung folgen, als Ausreißer verworfen werden. Wenn nach einer gewissen Zeit oder Event korreliert nach einer Anzahl von befahrbaren Trajektorien 17 eine Häufung bisher verworfener Trajektorien 16 erkannt wird, kann die Referenztrajektorie 18 an zum Beispiel neue Verkehrsführungen angepasst werden. Wenn in einem Trajektoriensegment eine Baustelle ist und daher alle neuen Trajektorien 16 eine Umfahrung der Baustelle enthalten, dann wird die neue "aktuell beste" Trajektorie 17 nach einer Zeit beziehungsweise nach einer Häufigkeit die Umfahrung der Baustelle enthalten. Werden vermehrt ähnliche Abweichungen zur ursprünglichen Referenztrajektorie 18, insbesondere die dem Mittel der Massendaten entsprechen, detektiert, lassen sich reale Änderungen von Ausreißern oder fehlerbehafteten Daten verifizieren und dadurch Update-Hypothesen generieren. So können zum Beispiel Veränderungen im Parkhaus, Baustellen, Liegenbleiber oder auch andere temporäre Auffälligkeiten erkannt, unterschieden und verarbeitet werden.

Ferner kann es sein, dass einige Streckensegmente eine höhere Streuung der einzelnen Trajektorien 16 aufweisen als andere Streckensegmente, zum Beispiel wird in Segmenten mit Geradeausfahren vermutlich weniger Streuung über die verschiedenen Fahrzeugklassen vorliegen als in Segmenten mit Kurven, bei denen sich die Einlenkpunkte abhängig von der Fahrzeuggröße unterscheiden können. Darüber hinaus können auch verschiedene Beschleunigungen oder dergleichen eine Streuung aufweisen. Aus den Parametern, die eine höhere Streuung aufweisen, können Gruppen gebildet werden, um für den Fahrer relevante Trajektorien 16 zu generieren beziehungsweise die Trajektorien 16 genauer zu bewerten. Beispiele für diese Gruppen sind dynamische Fahrweise, große Fahrzeuge beziehungsweise vorsichtige Fahrzeuge.

Des Weiteren kann auch ein spezifisches Gütemaß 13 bestimmt werden, wobei hierbei insbesondere, wenn bestimmte Einsatzzwecke es erfordern, dieses spezifische Gütemaß 13 formuliert werden kann, wobei diese insbesondere dann von dem allgemeinen Gütemaß abweichen. Beispielsweise kann ein Gütemaß 13 vorgeschlagen werden, welches beschleunigungsoptimiert ist beziehungsweise abstandsoptimiert ist. Hierbei kann insbesondere ein sogenanntes Sicherheitsgefühl durch den Mindestabstand zu Hindernissen oder Wänden entsprechend angepasst werden. Ferner kann auch ein vorsichtiges Anfahren an Kreuzungen, ein zeitoptimiertes Gütemaß 13, beladungs- oder anhängeroptimiertes Gütemaß 13, ein verkehrsaufkommensabhängiges Gütemaß 13 sowie ein sicherheitsoptimiertes Gütemaß 13 vorgesehen sein.

## Patentansprüche

1. Verfahren zum Bestimmen einer aktuell befahrbaren Trajektorie (17) für ein zumindest teilweise assistiert betriebenes Kraftfahrzeug (7) mittels eines Assistenzsystems (1), bei welchem eine Referenztrajektorie (18) vorgegeben wird und bei welchem eine Vielzahl von weiteren, potentiell befahrbaren Trajektorien (16) bestimmt wird, wobei für eine jeweilige weitere Trajektorie (16) in Abhängigkeit von der Referenztrajektorie (18) ein jeweiliges Gütemaß (13) mittels einer elektronischen Recheneinrichtung (2) des Assistenzsystems (1) bestimmt wird und in Abhängigkeit von dem bestimmten Gütemaß (13) die aktuell befahrbare Trajektorie (17) aus der Vielzahl von weiteren, potentiell befahrbaren Trajektorien (16) mittels der elektronischen Recheneinrichtung (2) bestimmt wird,
**dadurch gekennzeichnet, dass**
bei dem Gütemaß (13) fahrerspezifische Eigenschaften (9) berücksichtigt werden, wobei eine Fahrweise eines Fahrers klassifiziert wird und nur Trajektorien (17) angeboten werden, die der klassifizierten Fahrweise entsprechen.

2. Verfahren nach Anspruch 1,
**dadurch gekennzeichnet, dass**
zusätzlich bei dem Gütemaß (13) zumindest eine fahrdynamische Eigenschaft (6) des Kraftfahrzeugs (7) auf den weiteren Trajektorien (16) berücksichtigt wird.

3. Verfahren nach Anspruch 1 oder 2,
**dadurch gekennzeichnet, dass**
zusätzlich bei dem Gütemaß (13) zumindest eine aktuelle Umgebungsbedingung (10) berücksichtigt wird.

4. Verfahren nach einem der vorhergehenden Ansprüche,
**dadurch gekennzeichnet, dass**
die Vielzahl von weiteren, potentiell befahrbaren Trajektorien (16) durch reales Aufzeichnen und/oder Simulieren erzeugt wird.

**5.** Verfahren nach einem der vorhergehenden Ansprüche,
**dadurch gekennzeichnet, dass**
die Vielzahl von weiteren, potentiell befahrbaren Trajektorien (16) vor der Gütemaßbewertung vorgefiltert werden und nicht-relevante weitere Trajektorien herausgefiltert werden.

**6.** Verfahren nach einem der vorhergehenden Ansprüche,
**dadurch gekennzeichnet, dass**
innerhalb des Gütemaßes (13) zumindest fahrzeugspezifische Eigenschaften (8) und/oder fahrerspezifischen Eigenschaften (9) gewichtet werden.

**7.** Verfahren nach einem der vorhergehenden Ansprüche,
**dadurch gekennzeichnet, dass**
in Abhängigkeit von reell abgefahrenen Trajektorien (3) die Referenztrajektorie (18) angepasst wird.

**8.** Verfahren nach einem der vorhergehenden Ansprüche,
**dadurch gekennzeichnet, dass**
eine Streuung von reell abgefahrenen Trajektoriensegmenten innerhalb einer reell abgefahrenen Trajektorie (3) berücksichtigt wird.

**9.** Computerprogrammprodukt mit Programmcodemittel, welche eine elektronische Recheneinrichtung (2) dazu veranlassen, wenn die Programmcodemittel von der elektronischen Recheneinrichtung (2) abgearbeitet werden, ein Verfahren nach einem der Ansprüche 1 bis 8 durchzuführen.

**10.** Assistenzsystem (1) zum Bestimmen einer aktuell befahrbaren Trajektorie (17) für ein zumindest teilweise assistiert betriebenes Kraftfahrzeug (7), mit zumindest einer elektronischen Recheneinrichtung (2), wobei das Assistenzsystem (1) um Durchführen eines Verfahrens nach einem der Ansprüche 1 bis 8 ausgebildet ist.

## Claims

**1.** Method for determining a currently drivable trajectory (17) for a motor vehicle (7), which is at least partially assisted, by means of an assistance system (1), in which method a reference trajectory (18) is specified, and a plurality of additional potentially drivable trajectories (16) are determined, wherein, for a relevant additional trajectory (16), a relevant figure of merit (13) is determined by means of an electronic computing device (2) of the assistance system (1) depending on the reference trajectory (18), and depending on the determined figure of merit (13), the currently drivable trajectory (17) is determined from the plurality of additional potentially drivable trajectories (16) by means of the electronic computing device (2), **characterized in that**
driver-specific properties (9) are taken into account in the figure of merit (13), wherein a driving style of a driver is classified, and only trajectories (17) corresponding to the classified driving style are offered.

**2.** Method according to claim 1,
**characterized in that**
in addition, at least one driving dynamics property (6) of the motor vehicle (7) on the additional trajectories (16) is taken into account in the figure of merit (13).

**3.** Method according to claim 1 or claim 2,
**characterized in that**
in addition, at least one current environmental condition (10) is taken into account in the figure of merit (13).

**4.** Method according to any of the preceding claims,
**characterized in that**
the plurality of additional potentially drivable trajectories (16) are generated by real recording and/or simulation.

**5.** Method according to any of the preceding claims,
**characterized in that**
the plurality of additional potentially drivable trajectories (16) are prefiltered before the figure of merit assessment, and non-relevant additional trajectories are filtered out.

**6.** Method according to any of the preceding claims,
**characterized in that**
within the figure of merit (13), at least vehicle-specific properties (8) and/or driver-specific properties (9) are weighted.

**7.** Method according to any of the preceding claims,
**characterized in that**
the reference trajectory (18) is adjusted depending on actually driven trajectories (3).

**8.** Method according to any of the preceding claims,
**characterized in that**
a scatter of actually driven trajectory segments within an actually driven trajectory (3) is taken into account.

**9.** Computer program product comprising program code means which cause an electronic computing device (2) to carry out a method according to any of claims 1 to 8 when the program code means are processed by the electronic computing device (2).

**10.** Assistance system (1) for determining a currently drivable trajectory (17) for an at least partially assisted motor vehicle (7), comprising at least one electronic computing device (2), wherein the assistance system (1) is designed to carry out a method according to any of claims 1 to 8.

**Revendications**

**1.** Procédé de détermination d'une trajectoire (17) actuellement praticable pour un véhicule automobile (7) fonctionnant au moins partiellement de manière assistée au moyen d'un système d'assistance (1), dans lequel une trajectoire de référence (18) est prédéfinie et dans lequel une pluralité d'autres trajectoires (16) potentiellement praticables est déterminée, dans lequel une mesure de qualité (13) respective est déterminée pour une autre trajectoire (16) respective en fonction de la trajectoire de référence (18) au moyen d'un dispositif de calcul électronique (2) du système d'assistance (1) et, en fonction de la mesure de qualité (13) déterminée, la trajectoire (17) actuellement praticable est déterminée parmi la pluralité d'autres trajectoires (16) potentiellement praticables au moyen du dispositif de calcul électronique (2), **caractérisé en ce que**
des propriétés spécifiques au conducteur (9) sont prises en compte dans la mesure de qualité (13), dans lequel un mode de conduite d'un conducteur est classé et seules des trajectoires (17) qui correspondent au mode de conduite classé sont proposées.

**2.** Procédé selon la revendication 1,
**caractérisé en ce que**
en outre, pour la mesure de qualité (13), au moins une propriété de dynamique de conduite (6) du véhicule automobile (7) est prise en compte sur les autres trajectoires (16).

**3.** Procédé selon la revendication 1 ou 2,
**caractérisé en ce que**
en outre, au moins une condition environnante actuelle (10) est prise en compte pour la mesure de qualité (13).

**4.** Procédé selon l'une des revendications précédentes,
**caractérisé en ce que**
la pluralité d'autres trajectoires (16) potentiellement praticables est générée par enregistrement réel et/ou par simulation.

**5.** Procédé selon l'une des revendications précédentes,
**caractérisé en ce que**
la pluralité d'autres trajectoires (16) potentiellement praticables est préfiltrée avant l'évaluation de mesure de qualité et les autres trajectoires non pertinentes sont sorties par filtrage.

**6.** Procédé selon l'une des revendications précédentes,
**caractérisé en ce que**
à l'intérieur de la mesure de qualité (13), au moins des propriétés spécifiques au véhicule (8) et/ou des propriétés spécifiques au conducteur (9) sont pondérées.

**7.** Procédé selon l'une des revendications précédentes,
**caractérisé en ce que**
en fonction de trajectoires (3) réellement parcourues, la trajectoire de référence (18) est adaptée.

**8.** Procédé selon l'une des revendications précédentes,
**caractérisé en ce que**
une répartition de segments de trajectoire réellement parcourus à l'intérieur d'une trajectoire (3) réellement parcourue est prise en compte.

**9.** Produit programme d'ordinateur comportant des moyens de code de programme qui amènent un dispositif de calcul électronique (2) à réaliser un procédé selon l'une des revendications 1 à 8 lorsque les moyens de code de programme sont traités par le dispositif de calcul électronique (2).

**10.** Système d'assistance (1) permettant de déterminer une trajectoire (17) actuellement praticable pour un véhicule automobile (7) fonctionnant au moins partiellement de manière assistée, comportant au moins un dispositif de calcul électronique (2), dans lequel le système d'assistance (1) est conçu pour réaliser un procédé selon l'une des revendications 1 à 8.

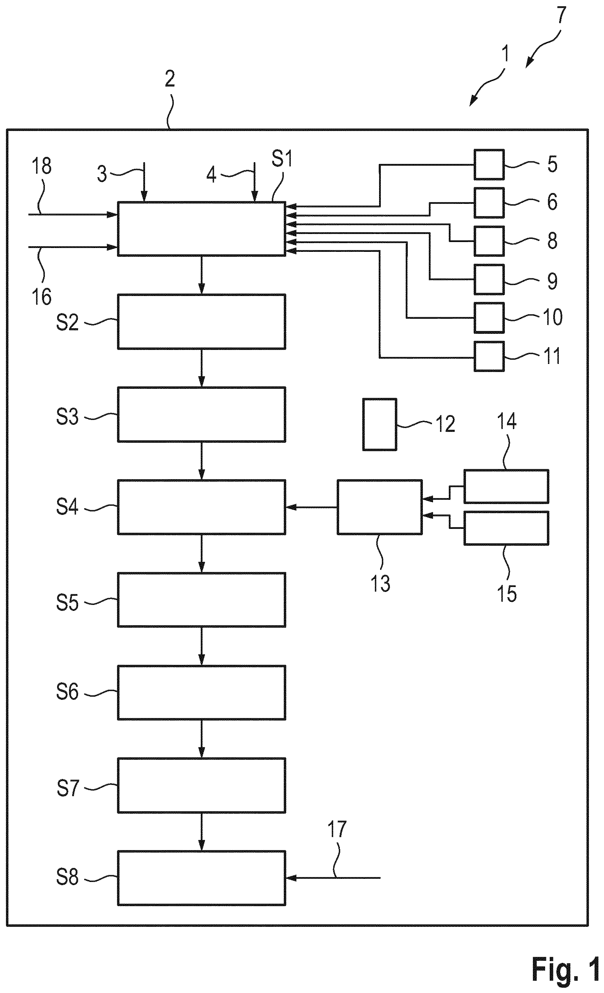

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207330 A1
- DE 102017200234 A1
- DE 102018109883 A1
- US 2021114617 A1
- US 2020387156 A1
- US 2019317512 A1